# EUROPEAN PATENT APPLICATION

(11) **EP 1 162 756 A2**
(43) Date of publication of application: **12.12.2001**
(21) Application number: 01112957.4
(22) Date of filing: 06.06.2001
(51) Int. Cl.: H04B 1/707

(54) **Rake reception apparatus**

(30) Priority: 06.06.2000 JP 2000169485
(71) Applicant: NEC CORPORATION, Tokyo (JP)
(72) Inventor: Chiba, Kenichiro, Minato-ku, Tokyo (JP)
(74) Representative: VOSSIUS & PARTNER

(57) **Abstract**

An apparatus which reduces the power consumption and scale of the reception circuit while retaining the function of tracking the phase jitter in a multipath propagation environment. The RAKE reception apparatus includes a searcher adapted for retrieving respective path timings for multi-path spread-spectrum signals received signals, a plurality of finger circuits for despreading and demodulating the spread-spectrum signals found by said searcher, and a RAKE combiner for combining outputs of the plural finger circuits. The plurality of finger circuits do not each contain a DLL circuit. Instead, there is one DLL circuit provided for a plurality of finger circuits. The finger circuit to be tracked by the single DLL circuit is selected by a changeover circuit. A control circuit is provided for controlling the changeover circuit based on the weighting information for each finger circuit obtained by the RAKE combiner. The said control circuit sequentially selects the optimal finger circuit to be tracked by the DLL circuit.

## Description

This invention relates to a reception apparatus for a spread spectrum communication system; in particular, it relates to a reception apparatus that may be used with advantage in a mobile telephone system using CDMA technology.

In a spread spectrum communication system, a carrier wave is modulated by transmission data and further multiplied by a pseudorandom noise (PN) code on the transmitting side, so that the transmitted carrier wave is modulated by the PN code and its frequency spectrum is spread. On the receiving side, the carrier wave is multiplied with the same PN code as that used on the transmitting side. If the receiving side PN code is the same PN code as that used in transmission and is also in phase with it, despreading occurs to produce a modulated output, which is further demodulated to derive reception data. In the spread spectrum communication system, as discussed above, despreading of the received signal requires use of a PN sequence which is the same as that used on the transmitting side not only in pattern but also in phase. The code division multiple access (CDMA) system enables multiple access by changing the pattern and the phase of each connection, and is recently finding application in mobile communications owing to its superior performance in resisting interference and jamming, and also in that it is able to realize robust reception characteristics in a multipath propagation environment.

In the CDMA-based mobile communication system, there is used a path diversity system (RAKE system) in which plural path signals are separately despread and demodulated by plural receivers in order to reduce the effect of fading caused by the multipath propagation environment and also in order to improve the signal-to-noise ratio.

As means for establishing and holding synchronization and demodulation under complex multipath propagation conditions, such a configuration is routinely used in which a searcher finds the delay characteristics for each path and sets the initial phase for a plurality of finger circuits, and the outputs of the respective finger circuits are optimally synthesized by a synthesis circuit based on information such as received signal strength indication (RSSI) and signal to noise ratio (S/N ratio).

In order to maintain synchronization (tracking) after establishing synchronization with the initial phase setting, such a configuration is widely used in which a delay lock loop (DLL) is provided for each finger circuit to follow the jitter of each path.

In a well-known manner, this DLL circuit typically includes a PN sequence generator for generating a PN sequence and two multipliers for detecting the correlation with respect to the reception signal by signals leading and lagging the optimum phase by a predetermined number of chips. Outputs of these two multipliers are passed through filters and detected by a detector and a difference is taken of the respective detector outputs (correlated outputs). This difference approaches zero at the optimum tracking point for the PN code phase. The oscillation frequency of a voltage controlled oscillator is controlled by a control signal obtained on smoothing the difference of the correlated values through a loop filter, with an output clock of the voltage controlled oscillator being fed to the PN sequence generator. Such a PN sequence with the optimal code phase (reference signal) is taken out from the DLL circuit for despreading and demodulation in the finger circuit.

Meanwhile, there are contained in the phase jitter of the multipath reception signal those components produced by, for example, movement of the terminal itself and which change in a concerted fashion between plural paths.

Moreover, in some recently proposed mobile communication systems, the terminal equipment is allowed to control the transmission timing. In such a system, it may be an occurrence that seen from the reception side, phase jitter components that change in unison in the respective paths as are predominant.

For coping with such multipath phase jitter, a DLL circuit needs to be provided for each finger circuit. Moreover, the phase control of the respective DLL circuits will need to be performed in unison, as a result of which the circuit scale and the power consumption of the reception device will be increased.

For example, in the JP Patent Kokai JP-A-10-209918, there is disclosed a structure of a reception device in which plural finger circuits are provided with DLLs for synchronization tracking, each DLL having a loop filter, thus increasing the circuit scale. In order to resolve the problem of increasing the circuit scale, each finger circuit includes a DLL for synchronization tracking with the plural finger circuits co-owning a loop filter (complete integration type order-two loop filter) forming a portion of the DLL.

There is much to be desired in the art as aforementioned. It is therefore an object of the present invention to overcome the above problem and provide a device which, while maintaining the function for tracking the phase jitter of the multipath propagation routes, is able to reduce the circuit scale to lower the power consumption.

According to a first aspect of the present invention, there is provided a RAKE reception apparatus having one delay lock loop circuit, termed "DLL circuit", herein, for performing control to keep synchronization for a plurality of finger circuits adapted for separately despreading and demodulating received signals passed through the respective paths of the multipath propagation environment, said apparatus comprising:
means for selecting one of the finger circuits which is to be an object of synchronous tracking in said DLL circuit, based on the information used by a RAKE combiner when synthesizing a demodulated output from the outputs of said plural finger circuits; and
means for aligning the phase of said DLL circuit with the phase of the one selected finger circuit.
According to a second aspect of the present invention, there is provided a RAKE reception apparatus comprising a searcher adapted for retrieving respective path timings for multi-path spread-spectrum signals received signals, a plurality of finger circuits for despreading and demodulating the spread-spectrum signals found by said searcher, and a RAKE combiner for combining outputs of the plural finger circuits. The plurality of finger circuits do not each contain a DLL circuit. Instead, there is one DLL circuit provided for a plurality of finger circuits. The finger circuit to be tracked by the single DLL circuit is selected by a changeover circuit. A control circuit is provided for controlling the changeover circuit based on the weighting information for each finger circuit obtained by the RAKE combiner. The said control circuit sequentially selects the optimal finger circuit to be tracked by the DLL circuit.

Further aspects and features of the present inventions are disclosed in the appended claims which are incorporated herein by reference thereto.
Fig.1 shows a structure of an embodiment of the present invention.
Fig.2 shows a structure of a Dll circuit embodying the present invention.
Fig.3 shows a structure of the DLL circuit embodying the present invention.
Fig.4 shows the structure of a modification of the present invention.
Fig.5 shows the structure of the DLL circuit in the modification shown in Fig.4.
Fig.6 shows the structure of the finger circuit in the modification shown in Fig.3.

A preferred embodiment of the present invention is hereinafter explained. In the preferred embodiment of the present invention, a common one display lock loop (DLL) circuit is provided for plural finger circuits in a RAKE receiver, without providing a delay lock loop circuit (DLL circuit) for synchronization holding control for each finger circuit. The DLL circuit is caused by a changeover circuit to track an optimal finger circuit. The remaining finger circuits are adapted for being controlled by clock outputs from the DLL circuit.

In more detail, the control circuit 3 controls the changeover circuit 4, based on the finger-based information, such as weighting information as found in synthesising demodulated output signals of the respective finger circuits to select sequentially the finger circuits to be tracked by the DLL circuit 5.

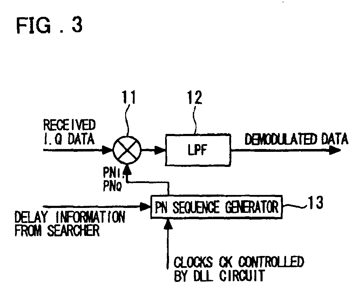

The clocks CK controlled by the DLL circuit 5 are fed to a PN sequence generator (13 in Fig.3) of each finger circuit to execute a synchronization keeping operation.

In the present invention, an output signal of one finger circuit, selected by the changeover circuit 4, is received by the DLL circuit 5. Based on this signal, the DLL circuit 5 aligns the phase of the PN code, used for despreading, with the phase of the PN sequence generator in the selected one PN sequence generator.

More specifically, the value of the shift register constituting the PN sequence generator of the selected one finger circuit is received through the changeover circuit 4 by the DLL circuit 5, and the value of the shift register constituting the PN sequence generator 60 in the DLL circuit 5 is set so as to be equal to the value of the shift register, so input, for aligning the phase of the PN sequence generator in the DLL circuit 5 with the phase of the PN sequence generator in the selected one finger circuit.

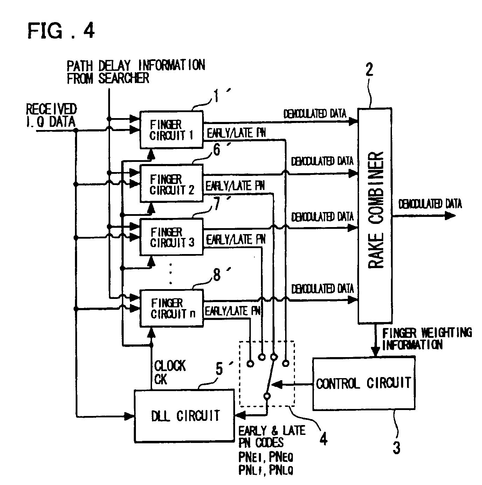

In an alternative embodiment of the present invention, shown in Fig.4, the PN code sequence output from the PN sequence generator of the selected one finger circuit is received by the DLL circuit 5' via the changeover circuit 4, and the DLL circuit 5' then uses the PN code string output from the PN sequence generator of the selected finger circuit for despreading such as to effect phase aligning with respect to the phase of the PN sequence generator in the finger circuit selected by the changeover circuit 4.

In the embodiment of the present invention, as discussed above, it is possible to reduce the circuit scale of the RAKE receiver while maintaining the function of tracking the phase jitter of the multipath propagation path.

In a preferred embodiment of the present invention, the DLL circuit includes a PN sequence generator 60 for branching reception in-phase (I)/ quadrature data (Q) input from th finger circuit, for generating and outputting early PN codes (an in-phase component PNEI and a quadrature component PNEQ) earlier in frequency divider timing than the PN codes used in the finger circuit (an in-phase component PNI and a quadrature component PNQ) and for generating and outputting late PN codes (an in-phase component PNLI and a quadrature component PNLQ) later in frequency divider timing than the PN codes used in the finger circuit ( PNI and PNQ);
a first complex multiplier 51 for multiplying the I/Q data with the PN codes (an in-phase component PNEI and a quadrature component PNEQ) generated by the PN sequence generator;
a second complex multiplier 54 for multiplying the I/Q data with the PN codes (PNLI, PNLQ) generated by the PN sequence generator;
a first low-pass filter 52 for smoothing an output of the first complex multiplier 51;
a second low-pass filter 55 for smoothing an output of the second complex multiplier 54;
a first amplitude detector 53 for detecting an output amplitude of the first low-pass filter;
a second amplitude detector 56 for detecting an output amplitude of the second low-pass filter;
a subtractor 57 for subtracting an output of the second amplitude detector 54 from an output of the first amplitude detector 53;
a loop filter 58 for smoothing an output of the subtractor 57; and
a voltage-controlled oscillator 59 fed with an output of the subtractor 57 as a control voltage; wherein
output clocks CK of the voltage-controlled oscillator 59 are routed to the PN sequence generator 60 and to the respective finger circuits (1, 6, 7, 8).

In an embodiment of the present invention, each finger circuit includes a PN sequence generator 13 for generating the PN sequence (PNI, PNQ) subject to an initial phase setting from a searcher, a complex multiplier 11 for multiplying the received input I/Q data with the PN sequence PNI, PNQ from the PN sequence generator 13, and a low-pass filter 12 for smoothing an output of the complex multiplier 11. An output of the low-pass filter 12 is output as a demodulated signal to the RAKE combiner 2.

In an embodiment of the present invention, the phase of the PN sequence generator 60 in the DLL circuit 5 is aligned with the phase of the PN sequence generator 13 in the finger circuit as selected by the changeover circuit 4. In this case, the status (shift register value) of the PN sequence generator 13 in the one selected finger circuit is loaded on the shift register of the PN sequence generator 60 in the DLL circuit 5.

In another preferred embodiment of the present invention, the PN sequence generator 13' in the finger circuit outputs PN codes (PNEI, PNEQ) earlier in timing than the PN codes used in the finger circuit (in-phase component PNI and quadrature component PNQ) and PN codes (PNLI, PNLQ) later in timing than the PN codes used in the finger circuit (in-phase component PNI and quadrature component PNQ). The PN sequences (PNEI, PNEQ, PNLI, PNLQ), output from the finger circuit as selected by the changeover circuit 4 are routed to the DLL circuit 5'.

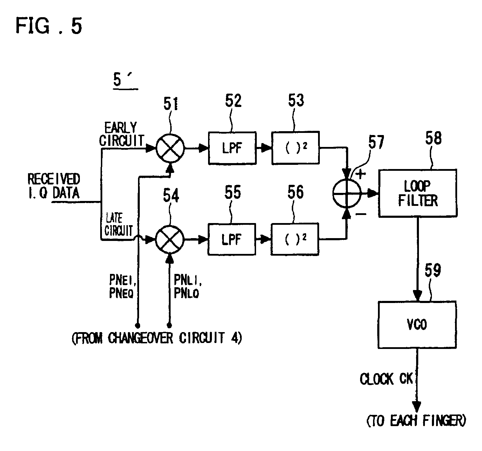

Referring to Fig.5, the DLL circuit 5' is fed with early PN codes (PNEI, PNEQ) and late PN codes (PNLI, PNLQ) as selected by the changeover circuit 4 and includes a first complex multiplier 51 for multiplying received in-phase (I)/quadrature (Q) data with the early PN codes (PNEI, PNEQ), a second complex multiplier 54 for multiplying received in-phase (I)/quadrature (Q) data with the late PN codes (PNLI, PNLQ), a first low-pass filter 52 for smoothing an output of the first complex multiplier 51, a second low-pass filter 55 for smoothing an output of the first complex multiplier 55, a first amplitude detector 53 for detecting an output amplitude of the first low-pass filter 52, a second amplitude detector 56 for detecting an output amplitude of the second low-pass filter, a subtractor 57 for subtracting an output of the second amplitude detector 56 from an output of the first amplitude detector 53, a loop filter 58 for smoothing an output of the subtractor 57 and a voltage-controlled oscillator 60 fed with an output of the loop filter 58 as a control voltage. Output clocks of the voltage-controlled oscillator are routed to the respective finger circuits such that there is no necessity of providing a PN sequence generator in the DLL circuit 5'.

### [Preferred Embodiments]

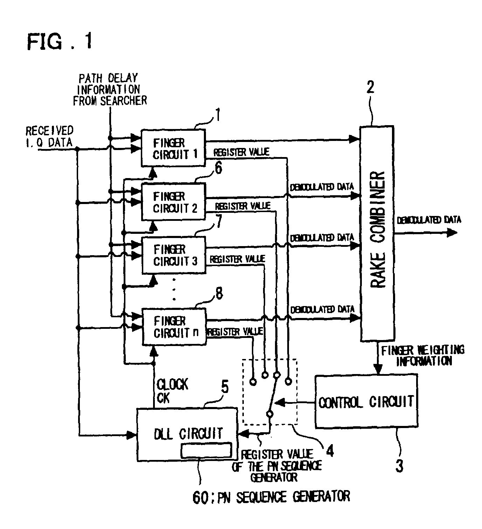

For more detailed and specified description of the embodiment of the present invention, preferred embodiments of the present invention are explained with reference to the drawings, in which Fig.1 shows the structure of a RAKE receiver embodying the present invention. Data I (in-phase)/Q (quadrature) received following quasi-synchronization detection are fed to plural (n) finger circuits 1, 6, 7 and 8 where the phase adjustment is made from one multipath transmission path to another based on the path delay information as found by a searcher circuit, not shown.

Demodulated signals from the finger circuits 1 and 6 to 8 (demodulated data) are fed to a RAKE combiner 2 so as to be synthesized in the RAKE combiner 2 based on the path-based weighting algorithm for demodulation. The RAKE combiner 2 effects phase alignment of the outputs of the despreading correlators (finger circuits), while weighting the phase-aligned outputs in proportion to the signal level and summing the weighted outputs to enable maximal ratio combining of the powers of the respective paths to realize the path diversity effect. That is, the maximum ratio combining phase-aligns respective multipath branch signals (demodulated output signals of the respective finger circuits) to weight the respective branch signals in proportion to the signal level detected by the signal level detector to sum the resulting weighted branch signals. The higher the CN (carrier to noise) ratio and the larger the signal level of a given branch, the larger is the contribution of the branch to an output.

Foe keeping the synchronization following initial acquisition, a DLL circuit 5 is used.

In an embodiment of the present invention, a sole DLL circuit 5 is used to control the clocks CK of the entire finger circuits 1, 6 to 8 in the RAKE receiver, without providing one DLL circuit 5 for each of the finger circuits.

If a RAKE receiver has e.g., mxn finger circuits, where m and n are preset positive numbers, it is of course possible to provide a common one DLL circuit in common for the n finger circuits and to provide a sum total of m DLL circuits in the RAKE receiver, such that a plurality of units are provided, each of which comprised of one DLL circuit in common for a set of the finger circuits.

The clocks CK are controlled based on the reception of I(in-phase)/Q (quadrature) data supplied to the DLL circuit 5 or on the path delay information as set in the finger circuits to be tracked, while the finger circuits used in controlling the DLL circuit 5 are selected by a changeover circuit 4.

The switching of the changeover circuit 4 is controlled by a control circuit 3 fed with the finger-based weighting information as found by the RAKE combiner 2. The control circuit 3 includes a maximum value detection circuit, not shown, for detecting the maximum value of the weighting information input from the RAKE combiner 2 and which is afforded to the finger circuit. The control circuit 3 selects the finger circuit having the maximum weighting information and outputs a switching command signal to the changeover circuit 4 to switch to the selected finger circuit. Alternatively, the control circuit 3 may store the chronological data of the weighting information on the finger circuit basis as found by the RAKE combiner 2 in a memory, not shown, to analyze the chronological data to select the finger circuit which will give the maximum finger weighting information.

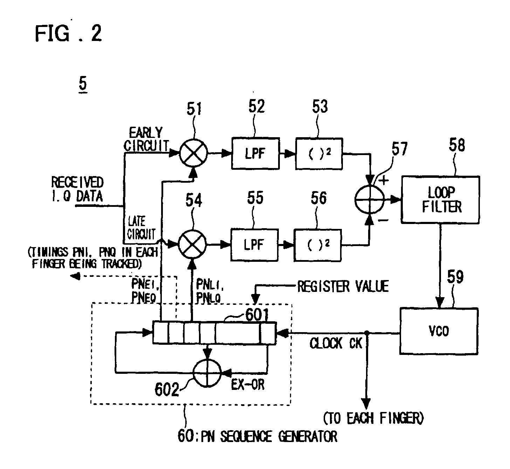

Fig.2 shows an illustrative structure of the DLL circuit 5 embodying the present invention. In Fig.2, the DLL circuit 5 is comprised of a routine early-late gate circuit. The input I/Q data received is branched and is multiplied by a complex multiplier 51 by PN codes PNEI, PNEQ generated by a PN sequence generator 60. The PN codes PNEI, PNEQ are of timings earlier than the timing of the PN code used in a PN sequence generator of the finger circuit. In a complex multiplier 54, the received I/Q data is multiplied by the PN codes PNEI, PNEQ of the delayed frequency divider timing generated by the PN sequence generator 60.

The PN sequence generator 60, generating and outputting PN codes, is comprised of a linear feedback shift register, made up of a shift register 601 and a parity generator (exclusive OR circuit) 602. The exclusive OR circuit 602 is fed with an output of one end (right end) of the shift register 601 and with an output of a preset stage (tap number) of the shift register 601, as inputs. An output signal of the exclusive OR circuit 602 is fed to an input at the other end (left end) of the shift register 601. In a well-known manner, the PN code generated by the PN sequence generator 60 has its characteristics determined by the length of the shift register 601, number or position of the tap input to the exclusive OR circuit 602 and by the initial value of the shift register 601. The early PN codes PNEI, PNEQ and the late PN codes PNLI, PNLQ are output from the positions on both sides of the take-out positions of the PN codes PNI, PNQ of the timings associated with the finger circuit.

The outputs of the complex multipliers 51, 54 are synthesized by a subtractor 57 through low-pass filters (LPF) 52, 55 and amplitude detectors 53, 56 and smoothed by a loop filter 58. The oscillation frequency of a voltage controlled oscillator (VC) 59 is variably controlled by an output signal of the loop filter 58 as a control signal. The VC 59 outputs clocks CK which are input as control clocks CK for the PN sequence generator 60. The clocks CK output by the VC 59 are fed not only to the finger circuit as selected, but also to the respective finger circuits.

Fig.3 shows an illustrative structure of the finger circuits 1, 6, 7 and 8 in the embodiment of the present invention shown in Fig.1. Each finger circuit generates PN code strings PNI, PNQ, using a PN sequence generator 13 in which the initial phase setting is to be made from a searcher. The PN sequence generator 13 has the number of taps and the position for inputting to the parity generator in common (same) with those of a shift register of the same length as the PN sequence generator 60 of the DLL circuit 5.

The input I/Q data, as received by the finger circuit, is multiplied in the complex multiplier 51 with the PN code strings PNI, PNQ, so as to be output through a low-pass filter (LPF) 12 to the RAKE combiner 2.

By the operation of the control circuit 3 and the changeover circuit 4, the DLL circuit 5 follows the phase jitter of one of the finger circuits 1, 6, 7 and 8, on which the maximum weight is put, based on the synthesis algorithm of the RAKE combiner, to control the clocks CK supplied to the respective finger circuits.

A variety of different configurations may be applied for aligning the phase of the PN sequence generator 60 in the DLL circuit 5 with the phase of the PN sequence generator 13 in the finger circuit to be tracked, as selected by the changeover circuit 4.

In an embodiment of the present invention, the finger circuit to be tracked is selected by the changeover circuit 4, as shown in Fig.1, and the status of the shift register of the PN sequence generator in the selected finger circuit (shift register value) is loaded to the shift register 601 of the PN sequence generator 60 of the DLL circuit 5 through the changeover circuit 4 (see Fig.2).

In an embodiment of the present invention, the register value of the shift register of the PN sequence generator 13 of each of the finger circuits 1, 6, 7, 8 (see Fig.3) is output to the changeover circuit 4. When the finger circuit is switched by the changeover circuit 4, the shift register value of the PN sequence generator 13 of the selected finger circuit is loaded on the shift register 601 of the DLL circuit 5.

By the control circuit 3 sequentially controlling the changeover circuit 4, the DLL circuit 5 follows the phase of the finger circuit having a good signal state. On the other hand, the respective finger circuits are phase-controlled by clocks CK output from the DLL circuit 5.

A second embodiment of the present invention is now explained. Referring to Fig.4, showing the structure of the second embodiment of the present invention, the PN sequence generator of each of n finger circuits 1', 6', 7' and 8' outputs PN codes (PNEI, PNEQ, PNLI, PNLQ) at an early timing and a late timing to the changeover circuit 4, which then selects the early and late PN codes, output from the finger circuit selected by a switching command from the control circuit 3, to send the selected codes to a DLL circuit 5'.

Fig.5 shows a structure of the DLL circuit 5' of the second embodiment of the present invention. Referring to Fig.5, the DLL circuit 5' of the second embodiment of the present invention is not in need of the PN sequence generator, in contradistinction from the DLL circuit 5 shown in Fig.2. In Fig.5, the PN code sequences (PNEI, PNEQ, PNLI, PNLQ) output from the finger circuit as selected by the changeover circuit 4 are supplied as the early and late PN codes input to the complex multipliers 51, 54.

Output clocks of the VC 59 are routed to the respective finger circuits.

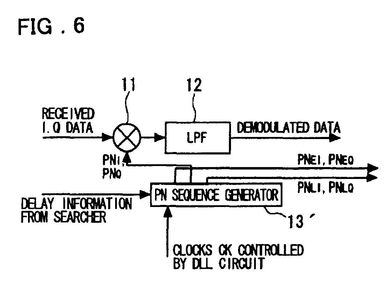

Fig.6 shows the structure of the finger circuit in the second embodiment of the present invention. In Fig.6, the finger circuit of the second embodiment of the present invention is basically of the same structure as the finger circuit of the previous embodiment shown in Fig.3. However, in the present second embodiment, the early and late PN code sequences (PNEI, PNEQ, PNLI, PNLQ) are output from the PN sequence generator 13' and routed through a signal line to the changeover circuit 4.

That is, there is provided no PN sequence generator in the DLL circuit 5' so that the circuit scale can be reduced further as compared to that in the previous embodiment.

Although the present invention has been explained in the foregoing with reference to preferred embodiments thereof, the present invention is not limited to these embodiments but may comprise various modifications which may come within the scope of the invention as defined in the claims.

The meritorious effects of the present invention are summarized as follows.

According to the present invention, the operation of keeping synchronization is possible without the necessity of providing the DLL circuit in each finger circuit, so that meritorious effects may be achieved that the circuitry and hence the receiver may be reduced in size to achieve low power consumption.

It should be noted that other objects, features and aspects of the present invention will become apparent in the entire disclosure and that modifications may be done without departing the gist and scope of the present invention as disclosed herein and claimed as appended herewith.

Also it should be noted that any combination of the disclosed and/or claimed elements, matters and/or items may fall under the modifications aforementioned.

## Claims

1. A RAKE reception apparatus having one delay lock loop circuit, termed "DLL circuit", herein, for performing control to keep synchronization for a plurality of finger circuits adapted for separately despreading and demodulating received signals passed through the respective paths of the multipath propagation environment, said apparatus comprising:
means for selecting one of the finger circuits which is to be an object of synchronous tracking in said DLL circuit, based on the information used by a RAKE combiner when synthesizing a demodulated output from the outputs of said plural finger circuits; and
means for aligning the phase of said DLL circuit with the phase of the one selected finger circuit.

2. The RAKE reception apparatus as defined in claim 1 wherein
the finger circuit on which the maximum weighting is placed at the time of maximum ratio combining in said RAKE combiner is selected to be the single finger circuit which is to be the object of synchronous tracking in said DLL circuit.

3. The RAKE reception apparatus as defined in claim 1 or 2
wherein said DLL circuit includes means for detecting the correlation between a reference signal leading and lagging an optimal phase each by a predetermined number of chips, and a reception signal, and for varying the oscillation frequency of clocks based on the difference between the two said correlation values, said clocks being supplied to the pseudorandom noise PN sequence generator in said DLL circuit adapted for generating said leading and lagging reference signals and to said plural finger circuits; and
wherein
a shift register value of the PN sequence generator of the one selected finger circuit is loaded into a shift register of the PN sequence generator in said DLL circuit to align a code phase of said DLL circuit with a code phase of the selected one finger circuit.

4. The RAKE reception apparatus as defined in claim 1 or 2
wherein said DLL circuit includes means for detecting the correlation between reference signals leading and lagging an optimal phase each by a predetermined number of chips, and the reception signal, and
means for varying the oscillation frequency of clocks based on the difference between the two said correlation values;
said clocks being supplied to said plural finger circuits, and said DLL circuit being not provided with PN sequence generators;
said DLL circuit being fed with a reference signal leading and lagging a preset timing with respect to the optimal phase, said reference signal being output by the PN sequence generator of the one selected finger circuit, said DLL circuit using these reference signals for detecting the correlation with respect to the reception signal to align the code phase of said DLL circuit with the code phase of the selected one of the finger circuits.

5. A RAKE reception apparatus including:
a plurality of finger circuits for receiving signals spectrum-spread by spread codes and for despreading and demodulating respective reception signals retrieved by a searcher adapted for retrieving respective paths from multipath reception signals, and a RAKE combiner for combining demodulated outputs from said plural finger circuits,
said plural finger circuits not including a delay lock loop circuit , termed "DLL circuit", for synchronization holding controlling in its inside, but including a sole DLL circuit in common for said plural finger circuits; said RAKE reception apparatus comprising:
a changeover circuit for switching to one of said plural finger circuits to be synchronization tracked by said DLL circuit, among the plural finger circuits; and
a control circuit for receiving the finger-circuit-based information used by said RAKE combiner in combining outputs of said finger circuits, selecting said one of the finger circuits to be tracked by said DLL circuit, based on said information, and for commanding the switching to said changeover circuit.

6. The RAKE reception apparatus as defined in claim 5 wherein said control circuit selects the finger circuit on which the maximum weighting is put, based on the finger-circuit-based weighting information output by said RAKE combiner, said control circuit commanding said changeover circuit to effect the switching to cause the DLL circuit to track the optimal finger circuit.

7. The RAKE reception apparatus as defined in claim 6 wherein said RAKE combiner combines the demodulated signals output by each finger circuit by a maximal ratio combining method.

8. The RAKE reception apparatus as defined in any one of claims 5 to 7 wherein clocks output from said DLL circuit are routed not only to the one of the plural finger circuits selected by said changeover circuit but also to the remaining finger circuits.

9. The RAKE reception apparatus as defined in claim 8 wherein said clocks output from said DLL circuit are routed to the PN sequence generator of each finger circuit to perform synchronization holding operation.

10. The RAKE reception apparatus as defined in any one of claims 5 to 9 wherein said DLL circuit receives an output signal of the one finger circuit selected by said changeover circuit and, based on the received signal, aligns the phase of the pseudorandom noise, termed "PN", code used for despreading the received data with the phase of the PN sequence generator in said one finger circuit selected by said changeover circuit.

11. The RAKE reception apparatus as defined in any one of claims 5 to 9 wherein the phase of the PN sequence generator in said DLL circuit is aligned to the phase of the PN sequence generator in the one finger circuit selected by said changeover circuit.

12. The RAKE reception apparatus as defined in any one of claims 5 to 9 wherein the value of the shift register constituting the PN sequence generator of the selected one of the plural finger circuits is routed through said changeover circuit to said DLL circuit and wherein
the value of the shift register constituting the PN sequence generator in said DLL circuit is set to a value of the shift register input through said changeover circuit to align the phase of the PN sequence generator in said DLL circuit with the phase of the PN sequence generator in the selected one of the finger circuits.

13. The RAKE reception apparatus as defined in any one of claims 5 to 9 wherein the PN code string output by the PN sequence generator of the selected one of the plural finger circuits is routed through said changeover circuit to said DLL circuit and wherein
said DLL circuit despreads the reception data using the PN code string output from the PN sequence generator of the selected one finger circuit for phase alignment with respect to the PN sequence generator in the selected one finger circuit.

14. The RAKE reception apparatus as defined in any one of claims 5 to 10 wherein said DLL circuit includes a PN sequence generator for generating and outputting an early PN code leading the PN code used in said finger circuit in timing and for generating and outputting a late PN code lagging the PN code used in said finger circuit in timing;
first and second multipliers for multiplying reception data with said early PN code and the late PN code, respectively;
first and second filters fed with outputs of said first and second multipliers, respectively;
first and second detectors for detecting outputs of said first and second filters, respectively;
a subtractor for subtracting an output of said second detector from an output of said first detector;
a loop filter for smoothing an output of said subtractor; and
a voltage-controlled oscillator fed with an output of said loop filter as a control voltage;
a shift register of said PN sequence generator being loaded with a value of a shift register of the PN sequence generator of the one selected finger circuit through said changeover circuit;
an output clock of said voltage-controlled oscillator being supplied to said PN sequence generator in said DLL circuit while being fed as a control clock to each of said finger circuits.

15. The RAKE reception apparatus as defined in any one of claims 5 to 10 and 14 wherein
said finger circuit includes a PN sequence generator having the initial phase set from said searcher and generating the PN code;
a multiplier for multiplying input reception data with the PN sequence from said PN sequence generator; and
a low-pass filter for smoothing an output of said multiplier to output a demodulated signal; wherein
a value of the shift register constituting the PN sequence generator of the selected finger circuit is supplied through said changeover circuit to said DLL circuit.

16. The RAKE reception apparatus as defined in any one of claims 5 to 10 in which said DLL circuit includes first and second multipliers for being fed with an early PN code and a late PN code output from the one finger circuit selected by said changeover circuit and for multiplying the reception data with said early PN code and said late PN code;
first and second filters for being fed with outputs of said first and second multipliers, respectively;
first and second detectors for detecting outputs of said first and second filters, respectively;
a subtractor for subtracting an output of said second detector from an output of said first detector;
a loop filter for smoothing an output of said subtractor; and
a voltage-controlled oscillator for being fed with an output of said loop filter as a control voltage; wherein
output clocks of said voltage-controlled oscillator is fed to said respective finger circuits.

17. The RAKE reception apparatus as defined in any one of claims 5 to 10 and 16 wherein
said finger circuit includes a PN sequence generator having the initial phase set from said searcher and generating the PN code;
a multiplier for multiplying input reception data with the PN sequence from said PN sequence generator; and
a low-pass filter for smoothing an output of said multiplier to output a demodulated signal; wherein
said PN sequence generator is configured for generating an early PN code preceding the PN code in timing and a late PN code later in timing than the PN code used in said finger circuit, and for outputting the early and late PN codes to said changeover circuit.

18. The RAKE reception apparatus as defined in any one of claims 5 to 10 wherein
said finger circuit includes a PN sequence generator having the initial phase set from said searcher and generating PN codes having an in-phase component PNI and a quadrature component PNQ;
a complex multiplier for multiplying received input in-phase(I)/quadrature (Q) data with the PN sequence (PNI, PNQ) from said PN sequence generator; and
a low-pass filter for smoothing an output of said complex multiplier for outputting a demodulated signal.

19. The RAKE reception apparatus as defined in any one of claims 5 to 10 wherein
said DLL circuit includes a PN sequence generator for generating and outputting early PN codes (an in-phase component PNI and a quadrature component PNQ) earlier in timing than the PN codes used in said finger circuit (an in-phase component PNI and a quadrature component PNQ) and for generating and outputting late PN codes (an in-phase component PNLI and a quadrature component PNLQ) later in timing than the PN codes used in said finger circuit (an in-phase component PNI and a quadrature component PNQ);
a first complex multiplier for multiplying received in-phase (I) and quadrature (Q) data with the PN codes (PNEI, PNEQ) generated by said PN sequence generator;
a second complex multiplier for multiplying received in-phase (I) and quadrature (Q) data with the PN codes (PNLI, PNLQ) generated by said PN sequence generator;
a first low-pass filter for smoothing an output of said first complex multiplier;
a second low-pass filter for smoothing an output of said second complex multiplier;
a first amplitude detector for detecting an output amplitude of said first low-pass filter;
a second amplitude detector for detecting an output amplitude of said second low-pass filter;
a subtractor for subtracting an output of said second amplitude detector from an output of said first amplitude detector;
a loop filter for smoothing an output of said subtractor; and
a voltage-controlled oscillator fed with an output of said subtractor as a control voltage; wherein
a value of a shift register of a PN sequence generator of said one finger circuit selected through said changeover circuit is loaded in the shift register of said PN sequence generator; and wherein
output clocks of said voltage-controlled oscillator are routed to said PN sequence generator and to said respective finger circuits.

20. The RAKE reception apparatus as defined in any one of claims 5 to 10 wherein
said DLL circuit is fed via said changeover circuit with early PN codes (PNEI, PNEQ) and late PN codes (PNLI, PNLQ) output from the PN sequence generator of the selected one finger circuit; and includes:
a first complex multiplier for multiplying received in-phase (I)/quadrature (Q) data with said early PN codes (PNEI, PNEQ);
a second complex multiplier for multiplying received in-phase (I)/quadrature (Q) data with said late PN codes (PNLI, PNLQ);
a first low-pass filter for smoothing an output of said first complex multiplier;
a second low-pass filter for smoothing an output of said first complex multiplier;
a first amplitude detector for detecting an output amplitude of said first low-pass filter;
a second amplitude detector for detecting an output amplitude of said second low-pass filter;
a subtractor for subtracting an output of said second amplitude detector from an output of said first amplitude detector;
a loop filter for smoothing an output of said subtractor; and
a voltage-controlled oscillator fed with an output of said loop filter as a control voltage; wherein
output clocks of said voltage-controlled oscillator is routed to said respective finger circuits.

21. The RAKE reception apparatus as defined in any one of claims 1 to 20 wherein the apparatus is provided with a single said DLL circuit or a plurality of said DLL circuits each one of which is provided for each group of a plurality of finger circuits.
